# EUROPEAN PATENT SPECIFICATION

(11) **EP 1 204 078 B1**
(45) Date of publication and mention of the grant of the patent: **03.12.2003**
(21) Application number: 00123400.4
(22) Date of filing: 02.11.2000
(51) Int. Cl.: G07F 7/08, G07D 7/00

(54) **A method for verifying the authenticity of articles**
Verfahren zur Echtheitsprüfung von Objekten
Procédé pour vérifier l'authenticité d'articles

(43) Date of publication of application: 08.05.2002
(73) Proprietor: Orell Füssli Security Documents AG, 8003 Zürich (CH)
(72) Inventor: Toedtli, Sergej, 8332 Wollerau (CH)
(74) Representative: Blum, Rudolf Emil Ernst

(56) References cited:
- EP-A- 0 854 449
- EP-A- 0 957 459
- WO-A-93/22745
- US-A- 5 925 865

## Description

The invention relates to a method for verifying the authenticity of articles according to the preamble of claim 1.

EP 0 957 459 describes a system where objects of value are marked with article numbers. An ownership certificate carrying a certification number accompanies the article. The two numbers are stored in a database for checking if a given ownership certificate belongs to a given article.

Systems of this type can be used to verify the authenticity of an article and provide a means to detect counterfeits.

EP 854 449 A2 relates to a system for determining the origin ZIP code for a postage meter, thereby certifying its validity. WO 93/22745 A1 describes a system wherein objects are marked with article numbers, parts of which may be hidden, and a central database stores information for each article, including the article numbers, in order to allow a verification thereof.

It is an object of the present invention to further refine such systems to provide an even better and more reliable certification of articles.

This object is reached by the method of claim 1. Accordingly, when an enquirer wants to verify the authenticity of the article, not only an article number but also a geographical location is fed to the database. The database stores a geographical area attributed to each article, and this area is compared to the enquirer's location. If the enquirer is not located in the geographical area, an alert is generated.

This alert can e.g. comprise a warning to the enquirer stating that the article must not be traded at the enquirer's location, thereby giving him a hint that he may be about to trade a grey market article.

The alert can also comprise a warning to the operator of the database or a manufacturer of the article, who may want to take further steps to detect and/or to take steps against grey market activities.

Preferably, the request from the enquirer is received through a communication network capable of generating origin information indicative of the enquirer's location. This origin information can e.g. be the country and area code of a phone number or, if the call is made from a cellular phone network, information derived from the cell the call is made from. The origin number can be used by the database to determine the enquirer's location.

Preferably, but not necessarily, a unique article number is attached to each article, and, in addition to this, an owner certificate is attributed to each article. The owner certificate carries a certification number different from the article number. The database stores both numbers for each article. In order to make his enquiry, the user must provide both numbers to the database, which will compare them to test for the article's authenticity. This procedure shows that the certificate is a true certificate attributed to the article he is about to purchase. To further increase security, the owner certificate should be a copy-proof document, i.e. it should comprise features that are difficult to reproduce, e.g. in photocopiers and similar reproduction devices.

Further preferred features and advantages of the invention are disclosed in the dependent claims as well as the following description making reference to the drawings, wherein:
Fig. 1 is an article with an article number,
Fig. 2 is an embodiment of an ownership certificate,
Fig. 3 shows several possible transmission paths for a request,
Fig. 4 is a flow chart of the procedure for verifying a pair of numbers, and
Fig. 5 is an extract from the database.

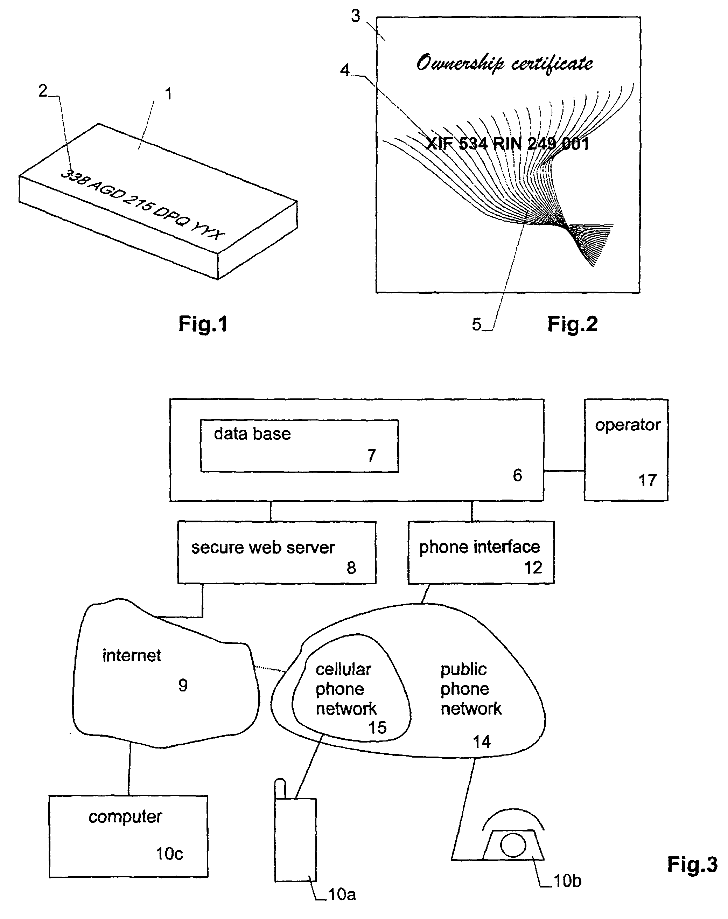

According to the present invention, articles at the risk of being forged or stolen, such as expensive watches, paintings, automobile spare parts, etc., are provided with a security mechanism such as it is e.g. shown in Figs. 1 and 2. These figures show schematically an article 1, which carries an article number 2 affixed thereto. Article number 2 can e.g. be imprinted upon, embossed or engraved in or otherwise connected to the article in such a way that it is difficult to remove or delete. The owner of article 1 also possesses an ownership certificate 3 carrying a certification number 4. Ownership certificate 3 is a security document provided with conventional security features, such as a hologram or a fine printed pattern 5 and/or a storage medium (e.g. a magnetic strip or a semiconductor chip for electronically storing a copy of the certification number). Such security features make it difficult to forge or copy the certification document.

Both, article number 2 and certification number 4 are e.g. alphanumeric strings of several digits or characters. They are both attributed to the same article, e.g. after its production. They are different from each other. Preferably, they are both at least in part generated by random or pseudo-random algorithms such that one number cannot be easily derived by the other, at least not by a member of the public. The numbers should be unique for each article.

As shown in Fig. 3, the manufacturer or, preferably, a trusted third party maintains a computer 6 with a database 7. Database 7 holds a list of all issued pairs of certification and article numbers. The operator of database 7 is called the "database holder".

In addition to this, a geographical area can be attributed to each article, designating e.g. the country or countries where the article can be traded. This geographical area can be attributed to the article at the time of manufacturing, but it can also be attributed later, e.g. when the article is sold to a distributor who is allowed to sell the article in a certain geographical region.

Verification of the authenticity of the certification and article numbers e.g. takes place when the article is sold, e.g. from a retailer to the end user, or between end users. In such a case, the seller shows article 1 as well as the ownership certificate 3 to the buyer. In order to verify that the ownership certificate is genuine and that offered article is sold at the point of sale with the manufacturer's authorization, the buyer sends an authentication request to the operator of database 7. He can do this in several ways:

Preferably, the buyer uses a phone 10a or 10b to contact the database holder. This phone can either be a wireless cellular phone 10a or a wire-bound phone 10b, and preferably it is a device owned and controlled by the buyer. Using a cellular phone 10a is preferred, because it allows the buyer to conduct a query right from the retailer's premises without relying on a (potentially insecure) phone or computer of the retailer.

Details on how to contact the database holder can e.g. be imprinted on ownership certificate 3.

In one embodiment, the buyer calls the data-base holder using conventional voice telephony using a public phone network 14 and, when using a cellular phone, a cellular phone network 15.

He will be connected to a phone interface 12 linked to the database holder's computer 6. When phone interface 12 is contacted, it will query the phone network 14 for information on the origin of the call in order to determine the geographical location of the caller.

In digital phone networks, a caller's number will normally be transmitted automatically with each call. When the caller uses a stationary phone 10b, the caller's number, and in particular the country code and, optionally, the local area code, allow to determine the geographical location of the caller.

When the caller uses a mobile phone 10a, the caller's number does not provide a secure means for determining his geographical location because he might be travelling, using roaming services to operate his phone. For covering this case, an agreement can be established between a phone network operator and the database holder, where the phone network operator agrees to provide the database holder with origin information regarding the location of the caller, e.g. the country or geographical region the call was made from. Such information can be derived from the cell of the cellular phone network the enquirer makes his call form, and it is readily available to the phone network operator. A cell in this context is a geographical sub-section of the area covered by the cellular phone network, e.g. characterized by being covered by a given radio transmitter.

In addition to the location of the caller (i.e. at least the country he calls from), the database holder needs the article number and the certification number in order to verify the authenticity. For this purpose, phone interface 12 asks the caller for these numbers, and the caller either speaks them into his phone or enters them using the phone's keyboard.

In a further embodiment, the buyer can use the internet 9 for contacting the database holder, either by using a cellular phone with browsing capabilities (such as WAP), or by using a computer 10c. In both cases, the buyer contacts a secure web server 8 of the database holder, which queries him for the article number and the phone number. Secure web server 8 is able to establish a secure connection to computer 10c or cellular phone 10a, which connection positively identifies at least the server (and preferably the client) and provides crypto-graphically encoded data exchange between them, e.g. by using known methods involving asymmetric public and private key pairs.

When using a cellular phone with WAP browser, secure web server 8 receives information regarding the caller's location automatically. When using a computer 10c, secure web server 8 requests the user to enter not only the article and certification numbers, but his location as well.

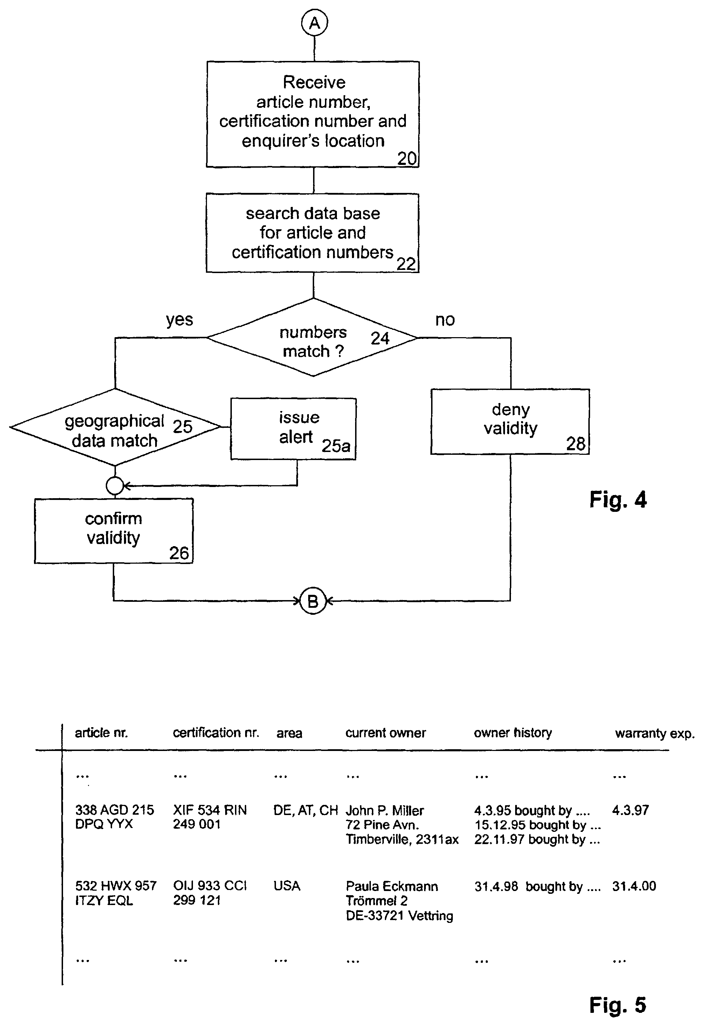

In all the above cases, the database holder will receive the article number, the certification number and the enquirer's (buyer's) location. This information is used to query database 7. The verification process is depicted in Fig. 4. Starting at point A, first the article and certification numbers as well as the enquirer's geographical location are received (step 20). Only when all this data is available, verification continues at step 22 by searching the database 7 for a pair of matching numbers. If a match is found (step 24), the enquirer's geographical location is compared to the geographical area attributed to the article (step 25). If the geographical data do not match, an alert is issued (step 25a). In all cases, the validity of the entered pair of numbers is confirmed in step 26, e.g. by sending a voice message or a corresponding web page to the enquirer. If no match is found, it must be assumed that the pair of entered numbers is incorrect and validity is denied in step 28. Operation ends and point B.

As can be seen, the enquirer can only query the database in storage 7 by entering both numbers. In particular, it is not possible to enter only one of the numbers and receive the second number as a result. As mentioned above, this makes forging ownership certificates or articles very difficult.

The alert issued in step 25a can e.g. be directed to an operator 17 of the database holder, to the manufacturer and/or to the enquirer. If an operator 17 is alerted and if the enquirer has contacted the database holder by phone, a phone connection can be established between the operator 17 and the enquirer. The operator can then ask the enquirer for more information, which may allow to prosecute an unauthorized reseller.

Access to the verification mechanism of Fig. 4 should be available to any person or institution who has a need for verifying an article's ownership. The Internet is a well suited medium for linking the enquirer to the database because of its world wide availability and standardisation, but a phone connection is preferred.

The need to check the article and certification numbers as well as the geographical location for each transferral of the article's ownership allows to build up a customer and article history database if the buyer (voluntarily) deposits his personal data when querying the system. For this purpose, database 7 may be provided not only with a list of certification and article numbers but also with a list of owners and the owner history.

In addition to this, database 7 can be used for storing further individual information for each article. For instance, when a retailer sells an article, he (or the buyer) can alert the database holder to enter the start of a warranty period.

Fig. 5 shows an example of the data that can be held by database 7. Column 1 contains the article numbers, column 2 the certification numbers, column 3 the geographical area attributed to the article, column 4 the current owner, column 5 a list of all recorded transferrals of ownership, and column 6 the warranty expiry date. Each row holds the data for one article.

Such data can be valuable e.g. for marketing and tracking purposes. Recording the current owner has the further advantage for attributing access privileges: Only the current owner is allowed to enter a transferral of ownership into the database.

In addition to this, the system disclosed here provides the manufacturer with timely point of sale information, thereby allowing him to predict demand and use his resources efficiently.

## Claims

1. A method for verifying authenticity of articles, wherein an article number (2) is affixed to each article, comprising the steps of
providing a database (7) with information on each article, said database storing, for each article, the corresponding article number,
electronically receiving through an electronic communication network an article number from an enquirer,
looking up, in the database, the article corresponding to the article number, and
sending, to said enquirer, a message confirming or denying the authenticity of the article,
**characterized by** the steps of,
providing, in the database (7), for each article a geographical area attributed to the article,
determining a geographical location of the enquirer,
comparing the geographical location of the enquirer to the geographical area of the looked up article and
generating an alert if the geographical location of the enquirer and the geographical area of the looked up article do not correspond.

2. The method of claim 1 wherein the communication network (14, 15) generates origin information regarding the geographical location of the enquirer, the method comprising the step of
using the origin information for determining the geographical location of the enquirer.

3. The method of claim 2 wherein the communication network is a public phone network (14).

4. The method of claim 3 wherein the origin information is at least part of a phone number of a phone (10a, 10b) used by the enquirer.

5. The method of one of the claims 3 or 4 wherein the communication network (9, 14, 15) comprises a cellular phone network (15) encompassing a plurality of cells and the origin information comprises information derived from the cell the enquirer is located in.

6. The method of one of the preceding claims wherein the article numbers are affixed to the articles and wherein an owner certificate is attributed to each article, said owner certificate carrying a certification number different from the article number of the article, comprising the steps of,
storing, for each article, the certification number in said database,
receiving the certification number, together with the article number, from the enquirer, and
testing if the article number and the certification number are both attributed to the same article.

7. The method claim 6 wherein the owner certificate is a copy-proof document.

## Patentansprüche

1. Verfahren zum Prüfen der Echtheit von Artikeln, wobei an jedem Artikel eine Artikelnummer (2) angebracht ist, umfassend die Schritte:
Bereitstellen einer Datenbank (7) mit Informationen über jeden Artikel, wobei die Datenbank für jeden Artikel die entsprechende Artikelnummer speichert,
elektronisches Empfangen einer Artikelnummer von einem Anfrager über ein elektronisches Kommunikationsnetzwerk,
Aufsuchen des der Artikelnummer entsprechenden Artikels in der Datenbank und
Senden einer die Echtheit des Artikels bestätigenden oder verneinenden Meldung an den Anfrager,
**gekennzeichnet durch** die Schritte
Bereitstellen, in der Datenbank (7), eines geographischen Bereichs, der jedem Artikel zugeordnet ist,
Bestimmen eines geographischen Orts des Anfragers,
Vergleichen des geographischen Orts des Anfragers mit dem geographischen Bereich des aufgesuchten Artikels und
Erzeugen einer Warnung, wenn der geographische Ort des Anfragers und der geographische Bereich des aufgesuchten Artikels nicht übereinstimmen.

2. Verfahren nach Anspruch 1, wobei das Kommunikationsnetzwerk (14, 15) Herkunftsinformationen betreffend den geographischen Ort des Anfragers erzeugt, wobei das Verfahren den Schritt aufweist
Verwenden der Herkunftsinformationen zur Bestimmung des geographischen Orts des Anfragers.

3. Verfahren nach Anspruch 2, wobei das Kommunikationsnetzwerk ein öffentliches Telefonnetzwerk (14) ist.

4. Verfahren nach Anspruch 3, wobei die Herkunf tsinformationen mindestens ein Teil einer Telefonnummer eines Telefons (10a, 10b) ist, das vom Anfrager benutzt wird.

5. Verfahren nach einem der Ansprüche 3 oder 4, wobei das Kommunikationsnetzwerk (9, 14, 15) ein Funktelefonnetz (15) aufweist, welches eine Vielzahl von Zellen umfasst, und die Herkunftsinformationen Informationen aufweisen, die von der Zelle abgeleitet sind, in welcher sich der Anfrager befindet.

6. Verfahren nach einem der vorangehenden Ansprüche, wobei die Artikelnummern an den Artikeln befestigt sind und wobei jedem Artikel ein Besitzerzertifikat zugeordnet ist, wobei das Besitzerzertifikat eine Zertifizierungsnummer trägt, welche unterschiedlich von der Artikelnummer des Artikels ist, wobei es die Schritte aufweist
Speichern der Zertifizierungsnummer für jeden Artikel in der Datenbank,
Empfangen der Zertifizierungsnummer zusammen mit der Artikelnummer vom Anfrager und
Testen, ob die Artikelnummer und die Zertifizierungsnummer beide dem gleichen Artikel zugeordnet sind.

7. Verfahren nach Anspruch 6, wobei das Besitzerzertifikat ein kopiersicheres Dokument ist.

## Revendications

1. Procédé pour vérifier l'authenticité d'articles, un numéro d'article (2) étant fixé à chaque article, comportant les étapes suivantes:
- créer une base de données (7) contenant une information se rapportant à chaque article et stockant le numéro d'article attribué à chaque article,
- réceptionner par l'intermédiaire d'un réseau de communication électronique un numéro d'article émis par un requérant
- identifier dans la base de données l'article qui correspond au numéro d'article, et
- envoyer au requérant un message confirmant ou infirmant l'authenticité de l'article,
**caractérisé par** les étapes suivantes:
- déterminer dans la base de données (7) une région géographique attribuée à l'article,
- localiser une zone géographique du requérant,
- comparer la zone géographique du requérant avec la région géographique de l'article identifié,
- générer une alarme si la zone géographique du requérant ne correspond pas à la région géographique de l'article identifié.

2. Procédé selon la revendication 1, dans lequel le réseau de communication génère une information concernant l'origine et se rapportant à la zone géographique du requérant, **caractérisé en ce qu'**on utilise l'information concernant l'origine pour déterminer la zone géographique du requérant.

3. Procédé selon la revendication 2, **caractérisé en ce que** le réseau de communication est un réseau de téléphone public (14).

4. Procédé selon la revendication 3, **caractérisé en ce que** l'information concernant l'origine consiste en au moins une partie d'un numéro de téléphone d'un téléphone (10a, 10b) utilisé par le requérant.

5. Procédé selon une des revendications 3 ou 4, **caractérisé en ce que** le réseau de communication (9, 14, 15) comprend un réseau téléphonique cellulaire 815) englobant plusieurs cellules, et que l'information concernant l'origine comporte une information dérivée de la cellule dans laquelle est localisé le requérant.

6. Procédé selon une des revendications précédentes dans lequel les numéros d'articles sont fixés sur les articles et où un certificat de propriété est attribué à chaque article, ledit certificat de propriété portant un numéro de certification qui diffère du numéro d'article de l'article, comportant les étapes suivantes:
- stocker le numéro de certification de chaque article dans la base de données,
- réceptionner le numéro de certification du requérant, ensemble avec le numéro d'article, et
- vérifier si le numéro d'article et le numéro de certification sont tous deux attribués au 'même article.

7. Procédé selon la revendication 6, **caractérisé en ce que** le certificat de propriété est un document incopiable.
